(19) Europäisches Patentamt
European Patent Office
Office européen des brevets

(11) EP 3 484 682 B1

(12) **EUROPEAN PATENT SPECIFICATION**

(45) Date of publication and mention of the grant of the patent:
**27.10.2021 Bulletin 2021/43**

(21) Application number: **17740256.7**

(22) Date of filing: **07.07.2017**

(51) Int Cl.:
***B29B 9/06*** *(2006.01)* ***B29B 9/12*** *(2006.01)*
***B29B 9/16*** *(2006.01)* ***B29C 48/00*** *(2019.01)*
***B29C 48/05*** *(2019.01)* ***B29C 48/08*** *(2019.01)*
***B29C 48/69*** *(2019.01)* ***C08J 3/12*** *(2006.01)*
***C08J 5/18*** *(2006.01)* *B29C 48/04 (2019.01)*
*B29C 48/285 (2019.01)*

(86) International application number:
**PCT/US2017/041022**

(87) International publication number:
**WO 2018/013409 (18.01.2018 Gazette 2018/03)**

(54) **METHOD OF MAKING AN EXTRUDED THIN FILM, AND THIN FILM SO PRODUCED**

VERFAHREN ZUR HERSTELLUNG EINER EXTRUDIERTEN DÜNNEN FOLIE, UND DANACH HERGESTELLTE DÜNNE FOLIE

PROCÉDÉ DE FABRICATION D’UNE FEUILLE MINCE EXTRUDÉE, ET FEUILLE MINCE AINSI PRODUITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.07.2016 US 201662361149 P**

(43) Date of publication of application:
**22.05.2019 Bulletin 2019/21**

(73) Proprietor: **SHPP Global Technologies B.V.**
**4612 PX Bergen op Zoom (NL)**

(72) Inventors:
- **SANNER, Mark A.**
**Mt. Vernon, Indiana 46720 (US)**
- **JOHNSON, Peter**
**Mt. Vernon, Indiana 47620 (US)**
- **GALLUCCI, Robert Russell**
**Mt. Vernon, Indiana 47620 (US)**
- **EHRENSBECK, Franklin**
**Mt. Vernon, Indiana 47620 (US)**

(74) Representative: **Balder IP Law, S.L.**
**Paseo de la Castellana 93**
**5a planta**
**28046 Madrid (ES)**

(56) References cited:
**WO-A1-2014/194212**
**US-A1- 2009 032 986**
**US-A1- 2009 286 972**
**US-A1- 2009 312 535**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 484 682 B1

## Description

BACKGROUND

Amorphous thermoplastic films, such as polyetherimide films, can be manufactured by solvent casting. The solvent casting process requires the use of solvents that increase the manufacturing cost of the films. Additionally, the films can have small amounts of solvent entrained therein. To remedy these deficiencies, extrusion has been proposed for the manufacture of amorphous thermoplastic films. Extrusion has proved problematic because of the large amount of waste associated with the process. Up to 20 weight percent or more of the amorphous thermoplastic starting material can be wasted because it is not converted to films that have sufficient quality. This is especially problematic in making very thin films. Thin thermoplastic films have been described in for instance WO 2014/194212A1, that describes a uniaxially- stretched, high yield extruded film comprising a polyetherimide comprising units derived from polymerization of an aromatic dianhydride with a diamine selected from a meta-phenylene diamine, a para-phenylene diamine, and a combination thereof, wherein the polyetherimide is endcapped with a substituted or unsubstituted aromatic primary monoamine.

There remains a need in the art for a method of extruding thin amorphous thermoplastic films which has a better yield than the currently available methods.

BRIEF DESCRIPTION

The aforementioned need is addressed by a method according to claim 1 of making an extruded film comprising: melt filtering an amorphous thermoplastic composition comprising an amorphous thermoplastic polymer with a glass transition temperature Tg of 130°C to 280°C, 150°C to 250°C or, 160°C to 230°C, as determined by differential scanning calorimetry to form a melt filtered amorphous thermoplastic composition; extruding the melt filtered amorphous thermoplastic composition into strands at a temperature $T_E$ represented by Equation A

$$T_g + 250 \geq T_E \geq T_g + 100^\circ C \qquad (A);$$

cooling the strands to a temperature $T_C$ represented by Equation B

$$T_g - 30 \geq T_C \geq 20^\circ C \qquad (B)$$

to form cooled strands; cutting the cooled strands into pellets having a length of 2.0 to 6.0 millimeters or 3.0 to 5.0 millimeters; treating the pellets by cyclone separation, vortex separation, vibration screening, air washing, water washing, fluidized bed treatment, pneumatic material separation, hydro-cyclone separation, electro static separation, or any combination thereof at a temperature Ts represented by the Equation C

$$T_g - 10\ ^\circ C \geq T_S \geq 20^\circ C \qquad (C)$$

to remove particulates of the amorphous thermoplastic composition having at least one of length, width or height less than 0.5 millimeters to form treated pellets; melting the treated pellets in an extruder at a temperature $T_p$ represented by the Equation D

$$T_g + 250 \geq T_p \geq T_g + 100^\circ C \qquad (D)$$

to form a molten composition; and extruding the molten composition through a flat die to form a film having an average thickness less than or equal to 50 micrometers.

Also described herein is an extruded film according to claim 11 and produced by the method of the preceding paragraph wherein the film has an average thickness less than 50 micrometers andless than 10 inclusions of the amorphous thermoplastic composition per 100 square centimeters, or less than 5 inclusions per 100 square centimeters. Also described herein is an electrical capacitor according to claim 12 comprising said extruded film having a thickness of 1 to 10 micrometers and less than 10 inclusions per 100 square centimeters wherein the amorphous thermoplastic polymer has a glass transition temperature of 150° to 250° C.

Further preferred embodiments are claimed in the dependent claims.

The above described and other features are exemplified by the following figures and detailed description.

BRIEF DESCRIPTION OF THE DRAWINGS

The following figures are exemplary embodiments wherein the like elements are numbered alike.

FIG. 1 is a depiction of an inclusion as described in Comparative Example 1.
FIG. 2 is a depiction of an inclusion as described in Comparative Example 1.
FIG. 3 is FTIR spectra as described in Comparative Example 1.
FIG. 4 is an expanded section of the FTIR spectra shown in FIG. 3.
FIGS. 5A and 5B are depictions of inclusions as described in Comparative Example 3.

DETAILED DESCRIPTION

Film extrusion methods, particularly for films having an average thickness less than or equal to (≤) 50 micrometers have suffered from waste due to the presence of defects and inclusions. Inclusions are regions of inhomogeneity can result in further issues such as discontinuities (holes/tears) and flow pattern disruptions (waviness) as well as compromising electrical performance and causing defects in secondary operations such as defects after metallization. It has long been thought that inclusions in amorphous thermoplastic resins were primarily due to the presence of impurities in the molten thermoplastic. Accordingly, efforts to reduce inclusions have focused on melt filtering and pellet sorting to produce a thermoplastic melt which has few or no contaminants. Even with rigorous melt filtering and clean melt extrusion procedures, inclusions remain an issue, particularly in films having an average thickness of less than 50 micrometers. Surprisingly it has been found that the inclusions comprise the same material as the amorphous thermoplastic polymer itself. It has further been discovered that the amount of inclusions is related to the amount of fines. One would expect that by more efficient heat transfer the small particles of a thermoplastic would quickly melt and form a homogenous molten polymer. However, in screw driven extrusion devices, which rely primarily on friction between the resin pellets and the screw and barrel the small particles (also referred to as fines) do not melt but are carried along, showing up as unmelted inclusions/defects in the thin film. With amorphous thermoplastics this is seen even at temperatures far above (greater than (>) 150°C) the resin Tg. This problems is especially limiting in the production of very thin films (less than (<) 50 micrometers in average thickness) produced at a high rate of extrusion (>0.5 feet/minute).

Fines, as used herein, refer to small particulates of amorphous thermoplastic composition which have a length, width, height, or a combination of any two or more of the foregoing, of less than 1.0 millimeters (mm), or less than or equal to 0.5 millimeters, or, less than or equal to 0.3 millimeters. Fines can have an aspect ratio (length/diameter (1/d)) greater than or equal to 5, or greater than or equal to 3. It is recognized that fines may have an irregular shape. "Length" is herein defined as the major (longest) axis and "diameter" is defined as the minor axis (the longest axis that is perpendicular to the major axis). Fines can be the result of pieces breaking off of pellets, or small amounts of the composition accumulating on die faces. Fines can also result from cutting the extruded strand to form pellets. This is especially true when making cylindrical pellets. The fines are small irregular shaped particles usually with high aspect ratio (1/d >5) with angular features. Fines are often flake like in appearance. Lengths will vary somewhat with how the strands are formed and how the pellets are cut. In some instances the fines can range in size from 0.1 to 1.0 mm and have the exactly the same composition as the base resin, for example they have the same FTIR absorption spectra. Fines can also be characterized by normal chemical, spectroscopic and optical methods for example: DSC, GPC, NMR, UV-Visible spectra, microscopy and etc. and shown to be identical to the pellet composition. In some instances the fines will have the same Tg, weight average molecular weight and infrared spectra as the bulk resin. Without being bound by theory it is believed that in screw driven extruders the main source of melting is friction between the pellets, rotating screw and non-rotating extruder barrel. The fines generate little or no friction and are carried along in the molten thermoplastic stream largely unmelted and result in inclusions when the molten thermoplastic is extruded into a thin film.

The amorphous thermoplastic polymer has a glass transition temperature Tg, as determined by differential scanning calorimetry, of 130°C to 280°C, or 150°C to 250°C, or 160 to 230°C . Examples of amorphous thermoplastic polymers include polyetherimide, polycarbonate, poly(arylene-ether sulfone), cyclic polyolefin copolymer, imidized poly(meth)acrylates or a miscible mixture comprising any of the foregoing. Miscible blends are defined as blends showing a single glass transition temperature as determined, for example by differential scanning calorimetry (DSC).

Polyetherimides comprise more than 10, for example 20 to 1000, or 30 to 500, or 10 to 100 structural units of formula (1)

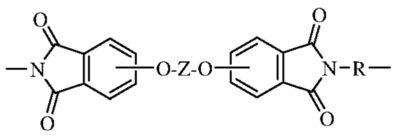

(1)

wherein each R is independently the same or different, and is a substituted or unsubstituted divalent organic group, such as a substituted or unsubstituted $C_{6-20}$ aromatic hydrocarbon group, a substituted or unsubstituted straight or branched chain $C_{4-20}$ alkylene group, a substituted or unsubstituted $C_{3-8}$ cycloalkylene group, in particular a halogenated derivative of any of the foregoing. In some embodiments R is divalent group of one or more of the formulas (2)

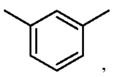, 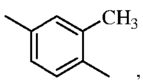, 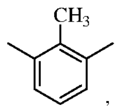, 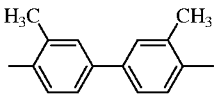, 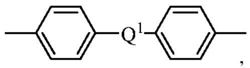,

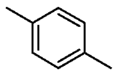, 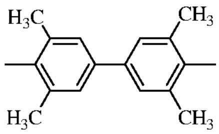, 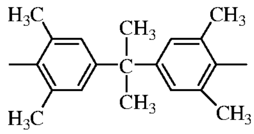, 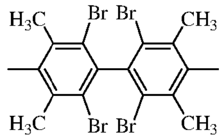,

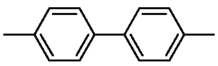, or 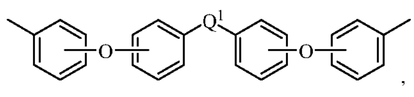,

(2)

wherein $Q^1$ is -O-, -S-, -C(O)-, $-SO_2-$, -SO-, $-C_yH_{2y}-$ wherein y is an integer from 1 to 5 or a halogenated derivative thereof (which includes perfluoroalkylene groups), or $-(C_6H_{10})_z-$ wherein z is an integer from 1 to 4. In some embodiments R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing. In some embodiments, greater than or equal to 10 mole percent of the R groups contain sulfone groups, and in other embodiments no R groups contain sulfone groups.

Further in formula (1), the divalent bonds of the -O-Z-O- group are in the 3,3', 3,4', 4,3', or the 4,4' positions, and Z is an aromatic $C_{6-24}$ monocyclic or polycyclic moiety optionally substituted with 1 to 6 $C_{1-8}$ alkyl groups, 1 to 8 halogen atoms, or a combination comprising at least one of the foregoing, provided that the valence of Z is not exceeded. Exemplary groups Z include groups of formula (3)

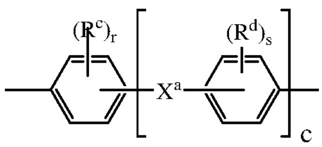

(3)

wherein $R^c$ and $R^d$ are each independently the same or different, and are a halogen atom or a monovalent $C_{1-6}$ alkyl group, for example; r and s are each independently integers of 0 to 4; c is 0 to 4; and $X^a$ is a bridging group connecting the hydroxy-substituted aromatic groups, where the bridging group and the hydroxy substituent of each $C_6$ arylene group are disposed ortho, meta, or para (specifically para) to each other on the $C_6$ arylene group. The bridging group $X^a$ can be a single bond, -O-, -S-, -S(O)-, $-S(O)_2-$, -C(O)-, or a Ci-is organic bridging group. The $C_{1-18}$ organic bridging group can be cyclic or acyclic, aromatic or non-aromatic, and can further comprise heteroatoms such as halogens, oxygen, nitrogen, sulfur, silicon, or phosphorous. The $C_{1-18}$ organic group can be disposed such that the $C_6$ arylene groups connected thereto are each connected to a common alkylidene carbon or to different carbons of the $C_{1-18}$ organic bridging group. A specific example of a group Z is a divalent group of formula (3a)

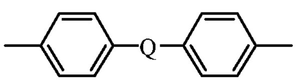

(3a)

wherein Q is -O-, -S-, -C(O)-, $-SO_2-$, -SO-, or $-C_yH_{2y}-$ wherein y is an integer from 1 to 5 or a halogenated derivative thereof (including a perfluoroalkylene group). In a specific embodiment Z is a derived from bisphenol A, such that Q in formula (3a) is 2,2-isopropylidene.

In an embodiment in formula (1), R is m-phenylene, p-phenylene, or a combination comprising at least one of the foregoing, and T is -O-Z-O- wherein Z is a divalent group of formula (3a). Alternatively, R is m-phenylene, p-phenylene, or a combination comprising at least one of the foregoing, and T is -O-Z-O wherein Z is a divalent group of formula (3a) and Q is 2,2-isopropylidene. Alternatively, the polyetherimide can be a copolymer comprising additional structural polyetherimide units of formula (1) wherein greater than or equal to 50 mole percent (mol%) of the R groups are bis(3,4'-phenylene)sulfone, bis(3,3'-phenylene)sulfone, or a combination comprising at least one of the foregoing and the remaining R groups are p-phenylene, m-phenylene or a combination comprising at least one of the foregoing; and Z is 2,2-(4-phenylene)isopropylidene, i.e., a bisphenol A moiety.

In some embodiments, the polyetherimide is a copolymer that optionally comprises additional structural imide units that are not polyetherimide units, for example imide units of formula (4)

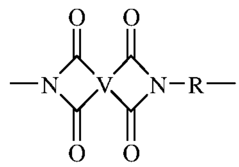

(4)

wherein R is as described in formula (1) and each V is the same or different, and is a substituted or unsubstituted $C_{6-20}$ aromatic hydrocarbon group, for example a tetravalent linker of the formulas

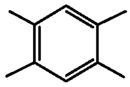

or

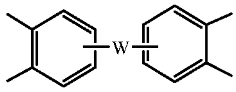

wherein W is a single bond, -S-, -C(O)-, $-SO_2-$, -SO-, or $-C_yH_{2y}-$ wherein y is an integer from 1 to 5 or a halogenated derivative thereof (which includes perfluoroalkylene groups). These additional structural imide units preferably comprise less than 20 mol% of the total number of units, and more preferably can be present in amounts of 0 to 10 mol% of the total number of units, or 0 to 5 mol% of the total number of units, or 0 to 2 mole % of the total number of units. In some embodiments, no additional imide units are present in the polyetherimide.

The polyetherimide can be prepared by any of the methods known to those skilled in the art, including the reaction of an aromatic bis(ether anhydride) of formula (5) or a chemical equivalent thereof, with an organic diamine of formula (6)

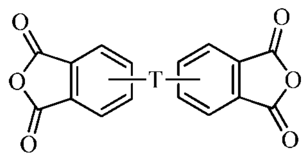

(5)

$$H_2N\text{-}R\text{-}NH_2 \qquad (6)$$

wherein T and R are defined as described above. Copolymers of the polyetherimides can be manufactured using a combination of an aromatic bis(ether anhydride) of formula (5) and an additional is(anhydride) that is not a bis(ether anhydride), for example pyromellitic dianhydride or bis(3,4-dicarboxyphenyl) sulfone dianhydride.

Illustrative examples of aromatic bis(ether anhydride)s include 2,2-bis[4-(3,4-dicarboxyphenoxy)phenyl]propane dianhydride (also known as bisphenol A dianhydride or BPADA), 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride;

4,4'-(hexafluoroisopropylidene)diphthalic anhydride; and 4-(2,3-dicarboxyphenoxy)-4'-(3,4-dicarboxyphenoxy)diphenyl sulfone dianhydride. A combination of different aromatic bis(ether anhydride)s can be used.

Examples of organic diamines include 1,4-butane diamine, 1,5-pentanediamine, 1,6-hexanediamine, 1,7-heptanediamine, 1,8-octanediamine, 1,9-nonanediamine, 1,10-decanediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. C1-4 alkylated or poly(C1-4)alkylated derivatives of any of the foregoing can be used, for example a polymethylated 1,6-hexanediamine. Combinations of these compounds can also be used. In some embodiments the organic diamine is m-phenylenediamine, p-phenylenediamine, 4,4'-diaminodiphenyl sulfone, 3,4'-diaminodiphenyl sulfone, 3,3'-diaminodiphenyl sulfone, or a combination comprising at least one of the foregoing. Polyetherimides can be of a branched or linear structure.

The polyetherimides can have a melt index of 0.1 to 10 grams per minute (g/min), as measured by American Society for Testing Materials (ASTM) D1238 at 340 to 370°C, using a 6.7 kilogram (kg) weight. In some embodiments, the polyetherimide has a weight average molecular weight (Mw) of 1,000 to 150,000 grams/mole (Dalton), as measured by gel permeation chromatography, using polystyrene standards. In some embodiments the polyetherimide has an Mw of 10,000 to 80,000 Daltons. Such polyetherimides typically have an intrinsic viscosity greater than 0.2 deciliters per gram (dl/g), or, more specifically, 0.35 to 0.7 dl/g as measured in m-cresol at 25°C. Some polyetherimides are described in ASTM D5205-10, a standard classification system for polyetherimide (PEI) materials.

In some embodiments, the polyetherimide comprises less than 50 ppm amine end groups. In other instances the polymer will also have less than 1 ppm of free, unpolymerized bisphenol A (BPA). In yet other instances the polymer will be free of benzylic protons, that is having a less than 50 ppm benzylic protons in the polymer structure. At high melt temperatures for example >300°C, polymers with such benzylic protons are often less stable showing changes in melt viscosity leading to inferior films and poor process control. Benzylic protons can be determined by chemical analysis for example proton nuclear magnetic resonance (HNMR) spectroscopy.

The polyetherimides can have low levels of residual volatile species, such as residual solvent and/or water. In some embodiments, the polyetherimides have a residual volatile species concentration of less than 1,000 parts by weight per million parts by weight (ppm), or, more specifically, less than 500 ppm, or, more specifically, less than 300 ppm, or, even more specifically, less than 100 ppm. In some embodiments, the composition has a residual volatile species concentration of less than 1,000 ppm, or, more specifically, less than 500 ppm, or, more specifically, less than 300 ppm, or, even more specifically, less than 100 ppm.

Examples of residual volatile species are halogenated aromatic compounds such as chlorobenzene, dichlorobenzene, trichlorobenzene, aprotic polar solvents such as dimethyl formamide (DMF), N-methyl pyrrolidinone (NMP), dimethyl sulfoxide (DMSO), diaryl sulfones, sulfolane, pyridine, phenol, veratrole, anisole, cresols, xylenols, dichloro ethanes, tetra chloro ethanes, pyridine and mixtures thereof.

Low levels of residual volatile species in the final polymer product can be achieved by known methods, for example, by devolatilization or distillation. In some embodiments the bulk of any solvent can be removed and any residual volatile species can be removed from the polymer product by devolatilization or distillation, optionally at reduced pressure. In other embodiments the polymerization reaction is taken to some desired level of completion in solvent and then the polymerization is essentially completed and most remaining water is removed during a devolatilization step following the initial reaction in solution. Apparatuses to devolatilize the polymer mixture and reduce solvent and other volatile species to the low levels needed for good melt processability are generally capable of high temperature heating under vacuum with the ability to rapidly generate high surface area to facilitate removal of the volatile species. The mixing portions of such apparatuses are generally capable of supplying sufficient power to pump, agitate, and stir the high temperature, polyetherimide melt which can be very viscous. Suitable devolatilization apparatuses include, but are not limited to, wiped films evaporators, for example those made by the LUWA Company and devolatilizing extruders, especially twin screw extruders with multiple venting sections, for example those made by the Coperion Company or Welding Engineers.

In some embodiments the polyetherimide has a glass transition temperature ($T_g$) of 180 to 280°C, or 200 to 260°C, or 210 to 250°C. Any miscible mixture of polyetherimides may be used.

"Polycarbonate" as used herein means a polymer having repeating structural carbonate units of formula (7)

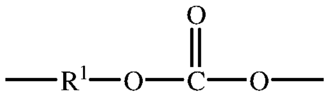 (7)

in which greater than or equal to 60 percent of the total number of $R^1$ groups contain aromatic moieties and the balance thereof are aliphatic, alicyclic, or aromatic. In an embodiment, each $R^1$ is a $C_{6-30}$ aromatic group, that is, contains at least one aromatic moiety. $R^1$ can be derived from an aromatic dihydroxy compound of the formula $HO-R^1-OH$, in particular of formula (8)

$$HO—A^1—Y^1—A^2—OH \quad (8)$$

wherein each of $A^1$ and $A^2$ is a monocyclic divalent aromatic group and $Y^1$ is a single bond or a bridging group having one or more atoms that separate $A^1$ from $A^2$. In an embodiment, one atom separates $A^1$ from $A^2$. Specifically, each $R^1$ can be derived from a bisphenol of formula (9)

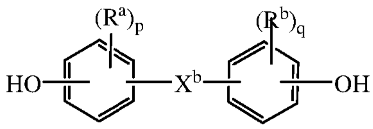

(9)

wherein $R^a$ and $R^b$ are each independently a halogen, $C_{1-12}$ alkoxy, or $C_{1-12}$ alkyl, and p and q are each independently integers of 0 to 4. It will be understood that when r or s is less than 4, the valence of each carbon of the ring is filled by hydrogen. Also in formula (9), $X^b$ is a bridging group connecting the two hydroxy-substituted aromatic groups, where the bridging group and the hydroxy substituent of each $C_6$ arylene group are disposed ortho, meta, or para (specifically para) to each other on the $C_6$ arylene group. In an embodiment, the bridging group $X^b$ is single bond, -O-, -S-, -S(O)-, $-S(O)_2-$, -C(O)-, or a $C_{1-1}$ organic group. The $C_{1-18}$ organic bridging group can be cyclic or acyclic, aromatic or non-aromatic, and can further comprise heteroatoms such as halogens, oxygen, nitrogen, sulfur, silicon, or phosphorous. The $C_{1-18}$ organic group can be disposed such that the $C_6$ arylene groups connected thereto are each connected to a common alkylidene carbon or to different carbons of the $C_{1-18}$ organic bridging group. In an embodiment, r and s is each 1, and $R^a$ and $R^b$ are each a $C_{1-3}$ alkyl group, specifically methyl, disposed meta to the hydroxy group on each arylene group. Polycarbonates can be of a branched or linear structure. Any miscible mixture of polycarbonates may be used. Some polycarbonates are described in ASTM D3935-15, a standard classification system for some polycarbonate (PC) materials.

In an embodiment, $X^b$is a $C_{3-18}$ cycloalkylidene, a $C_{1-25}$ alkylidene of formula — $C(R^f)(R^g)$ — wherein $R^f$ and $R^g$ are each independently hydrogen, $C_{1-12}$ alkyl, $C_{1-12}$ cycloalkyl, $C_{7-12}$ arylalkyl, $C_{1-12}$ heteroalkyl, or cyclic $C_{7-12}$ heteroarylalkyl, or a group of the formula — $C(=R^h)$— wherein $R^h$ is a divalent $C_{1-12}$ hydrocarbon group. Groups of these types include methylene, cyclohexylmethylidene, ethylidene, neopentylidene, and isopropylidene, as well as 2-[2.2.1] -bicycloheptylidene, cyclohexylidene, 3,3-dimethyl-5-methylcyclohexylidene, cyclopentylidene, cyclododecylidene, and adamantylidene.

In another embodiment, $X^b$ is a $C_{1-18}$ alkylene, a $C_{3-18}$ cycloalkylene, a fused $C_{6-18}$ cycloalkylene, or a group of the formula $—J^1—G—J^2—$ wherein $J^1$ and $J^2$ are the same or different $C_{1-6}$ alkylene and G is a $C_{3-12}$ cycloalkylidene or a $C_{6-16}$ arylene.

For example, $X^b$ can be a substituted $C_{3-18}$ cycloalkylidene of formula (10)

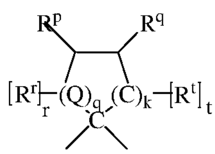 (10)

wherein $R^r$, $R^p$, $R^q$, and $R^t$ are each independently hydrogen, halogen, oxygen, or $C_{1-12}$ hydrocarbon groups; Q is a direct bond, a carbon, or a divalent oxygen, sulfur, or -N(Z)- where Z is hydrogen, halogen, hydroxy, $C_{1-12}$ alkyl, $C_{1-12}$ alkoxy, $C_{6-12}$ aryl, or $C_{1-12}$ acyl; r is 0 to 2, t is 1 or 2, q is 0 or 1, and k is 0 to 3, with the proviso that at least two of $R^r$,

$R^p$, $R^q$, and $R^t$ taken together are a fused cycloaliphatic, aromatic, or heteroaromatic ring. It will be understood that where the fused ring is aromatic, the ring as shown in formula (10) will have an unsaturated carbon-carbon linkage where the ring is fused. When k is one and q is 0, the ring as shown in formula (10) contains 4 carbon atoms, when k is 2, the ring as shown in formula (10) contains 5 carbon atoms, and when k is 3, the ring contains 6 carbon atoms. In an embodiment, two adjacent groups (e.g., $R^q$ and $R^t$ taken together) form an aromatic group, and in another embodiment, $R^q$ and $R^t$ taken together form one aromatic group and $R^r$ and $R^p$ taken together form a second aromatic group. When $R^q$ and $R^t$ taken together form an aromatic group, $R^p$ can be a double-bonded oxygen atom, i.e., a ketone, or Q can be -N(Z)- wherein Z is phenyl.

Bisphenols wherein $X^b$ is a cycloalkylidene of formula (10) can be used in the manufacture of polycarbonates containing phthalimidine carbonate units of formula (1a)

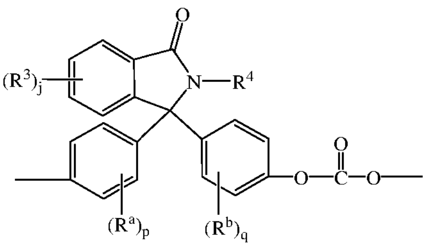

(1a)

wherein $R^a$, $R^b$, p, and q are as in formula (9), $R^3$ is each independently a $C_{1-6}$ alkyl, j is 0 to 4, and $R_4$ is hydrogen, $C_{1-6}$ alkyl, or a substituted or unsubstituted phenyl, for example a phenyl substituted with up to five $C_{1-6}$ alkyls. For example, the phthalimidine carbonate units are of formula (1b)

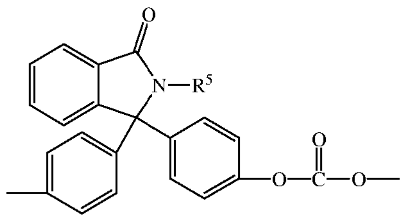

(1b)

wherein $R^5$ is hydrogen, phenyl optionally substituted with up to five 5 $C_{1-6}$ alkyls, or $C_{1-4}$ alkyl. In an embodiment in formula (1b), $R^5$ is hydrogen, methyl, or phenyl, specifically phenyl. Carbonate units (1b) wherein $R^5$ is phenyl can be derived from 2-phenyl-3,3'-bis(4-hydroxy phenyl)phthalimidine (also known as 3,3-bis(4-hydroxyphenyl)-2-phenylisoindolin-1-one, or N-phenyl phenolphthalein bisphenol ("PPPBP")).

Other bisphenol carbonate repeating units of this type are the isatin carbonate units of formula (1c) and (1d)

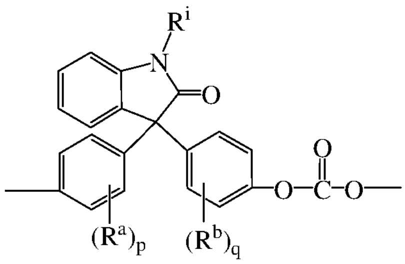

(1c)

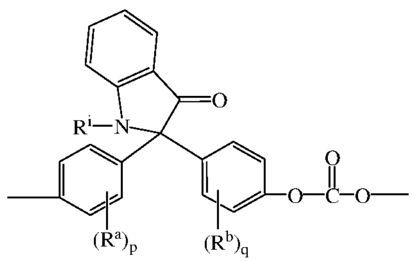

(1d)

wherein $R^a$ and $R^b$ are each independently a halogen, $C_{1-12}$ alkoxy, or $C_{1-12}$ alkyl, p and q are each independently 0 to 4, and $R^i$ is $C_{1-12}$ alkyl, phenyl optionally substituted with 1 to 5 $C_{1-10}$ alkyl, or benzyl optionally substituted with 1 to 5 $C_{1-10}$ alkyl. In an embodiment, $R^a$ and $R^b$ are each methyl, p and q are each independently 0 or 1, and $R^i$ is $C_{1-4}$ alkyl or phenyl.

Other examples of bisphenol carbonate units derived from of bisphenols (3) wherein $X^b$ is a substituted or unsubstituted $C_{3-18}$ cycloalkylidene include the cyclohexylidene-bridged bisphenol of formula (1e)

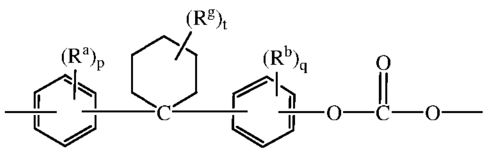

(1e)

wherein $R^a$ and $R^b$ are each independently $C_{1-12}$ alkyl, $R^g$ is $C_{1-12}$ alkyl, p and q are each independently 0 to 4, and t is 0 to 10. In a specific embodiment, at least one of each of $R^a$ and $R^b$ are disposed meta to the cyclohexylidene bridging group. In an embodiment, $R^a$ and $R^b$ are each independently $C_{1-4}$ alkyl, $R^g$ is $C_{1-4}$ alkyl, p and q are each 0 or 1, and t is 0 to 5. In another specific embodiment, $R^a$, $R^b$, and $R^g$ are each methyl, p and q are each 0 or 1, and t is 0 or 3, specifically 0. In still another embodiment, p and q are each 0, each $R^g$ is methyl, and t is 3, such that $X^b$ is 3,3-dimethyl-5-methyl cyclohexylidene.

Examples of other bisphenol carbonate units derived from bisphenol (9) wherein $X^b$ is a substituted or unsubstituted $C_{3-18}$ cycloalkylidene include adamantyl units of formula (If) and fluorenyl units of formula (1g)

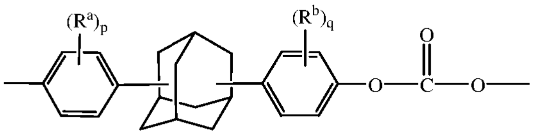

(1f)

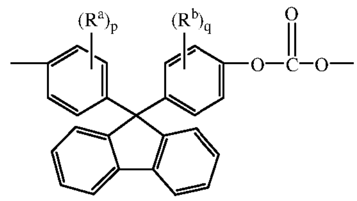

(1g)

wherein $R^a$ and $R^b$ are each independently $C_{1-12}$ alkyl, and p and q are each independently 1 to 4. In a specific embodiment, at least one of each of $R^a$ and $R^b$ are disposed meta to the cycloalkylidene bridging group. In an embodiment, $R^a$ and $R^b$ are each independently $C_{1-3}$ alkyl, and p and q are each 0 or 1; specifically, $R^a$, $R^b$ are each methyl, p and q are each 0 or 1, and when p and q are 1, the methyl group is disposed meta to the cycloalkylidene bridging group. Carbonates containing units (1a) to (1g) are useful for making polycarbonates with high glass transition temperatures (Tg) and high heat distortion temperatures.

Other useful dihydroxy compounds of the formula HO-$R^1$-OH include aromatic dihydroxy compounds of formula (11)

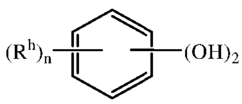

(11)

wherein each $R^h$ is independently a halogen atom, $C_{1-10}$ hydrocarbyl group such as a $C_{1-10}$ alkyl, a halogen-substituted $C_{1-10}$ alkyl, a $C_{6-10}$ aryl, or a halogen-substituted $C_{6-10}$ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol

compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (9) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. In a specific embodiment, the polycarbonate is a linear homopolymer derived from bisphenol A, in which each of $A^1$ and $A^2$ is p-phenylene and $Y^1$ is isopropylidene in formula (8).

"Polycarbonates" includes homopolycarbonates (wherein each $R^1$ in the polymer is the same), copolymers comprising different $R^1$ moieties in the carbonate ("copolycarbonates"), and copolymers comprising carbonate units and other types of polymer units, such as ester units or siloxane units.

A specific type of copolymer is a poly(ester-carbonate), also known as a polyester-polycarbonate. Such copolymers further contain, in addition to recurring carbonate units of formula (1), repeating units of formula (12)

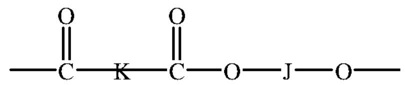

(12)

wherein J is a divalent group derived from a dihydroxy compound (including a reactive derivative thereof), and can be, for example, a $C_{2-10}$ alkylene, a $C_{6-20}$ cycloalkylene, a $C_{6-20}$ arylene, or a polyoxyalkylene in which the alkylene groups contain 2 to 6 carbon atoms, specifically 2, 3, or 4 carbon atoms; and K is a divalent group derived from a dicarboxylic acid (including a reactive derivative thereof), and can be, for example, a $C_{2-20}$ alkylene, a $C_{6-20}$ cycloalkylene, or a $C_{6-20}$ arylene. Copolyesters containing a combination of different K or J groups can be used. The polyester units can be branched or linear.

In an embodiment, J is a $C_{2-30}$ alkylene group having a straight chain, branched chain, or cyclic (including polycyclic) structure, for example ethylene, n-propylene, i-proplyene, 1,4-butylene, 1,6-cyclohexylene, or 1,4-methylenecyclohexane. In another embodiment, J is derived from a bisphenol of formula (9), e.g., bisphenol A. In another embodiment, J is derived from an aromatic dihydroxy compound of formula (11), e.g, resorcinol.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination comprising at least one of the foregoing acids. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, 1,4-cyclohexane dicarboxylic acid, or a combination comprising at least one of the foregoing acids. A specific dicarboxylic acid comprises a combination of isophthalic acid and terephthalic acid wherein the weight ratio of isophthalic acid to terephthalic acid is 91:9 to 2:98.

Specific ester units include ethylene terephthalate, n-propylene terephthalate, n-butylene terephthalate, 1,4-cyclohexanedimethylene terephthalate, and ester units derived from isophthalic acid, terephthalic acid, and resorcinol (ITR). The molar ratio of ester units to carbonate units in the copolymers can vary broadly, for example 1:99 to 99:1, specifically 10:90 to 90:10, more specifically 25:75 to 75:25, or 2:98 to 15:85, depending on the desired properties of the final composition. Specific poly(ester-carbonate)s are those including bisphenol A carbonate units and isophthalate-terephthalate-bisphenol A ester units, also commonly referred to as poly(carbonate-ester)s (PCE) poly(phthalate-carbonate)s (PPC) depending on the molar ratio of carbonate units and ester units.

The polycarbonates can have an intrinsic viscosity, as determined in chloroform at 25°C, of 0.3 to 1.5 deciliters per gram (dl/gm), specifically 0.45 to 1.0 dl/gm. The polycarbonates can have a weight average molecular weight of 10,000 to 100,000 Daltons, specifically 20,000 to 50,000 Daltons, as measured by gel permeation chromatography (GPC), using a crosslinked styrene-divinylbenzene column and calibrated to bisphenol A homopolycarbonate references. GPC samples are prepared at a concentration of 1 mg per ml, and are eluted at a flow rate of 1.5 ml per minute. In some embodiments the polycarbonate has a glass transition temperature of 130 to 270°C, or, 130 to 230°C, or, 150°C to 200°C. Any miscible mixture of polycarbonates, polycarbonate copolymers, silicone polycarbonate copolymers, isoindolinone polycarbonates or polyester carbonates may be used.

In other instances the polycarbonate will be free of benzylic protons, than is having a less than 50 ppm benzylic

protons in the polymer structure. At high melt temperatures for example >300°C, polymers with such benzylic protons are often less stable showing changes in melt viscosity leading to inferior films and poor process control. Benzylic protons can be determined by chemical analysis for example proton nuclear magnetic resonance (HNMR) spectroscopy.

A "poly(arylene ether-sulfone)" as used herein refers to polymers having a backbone of formula (13)

$$-Ar^3-SO_2-Ar^4-O- \qquad (13)$$

wherein each $Ar^3$ and $Ar^4$is the same is the same or different, and is a group of formula (14)

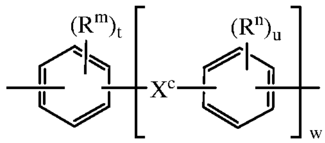

(14)

wherein w is 0 or 1, $R^m$ and $R^n$ are each independently a linear or branched $C_{1-10}$ alkyl, linear or branched $C_{2-10}$ alkenyl, linear or branched $C_{2-10}$ alkynyl, $C_{6-18}$ aryl, $C_{7-20}$ alkylaryl, $C_{7-20}$ arylalkyl, $C_{5-10}$ cycloalkyl, $C_{5-20}$ cycloalkenyl, linear or branched $C_{1-10}$ alkylcarbonyl, $C_{6-18}$ arylcarbonyl, halogen, nitro, cyano, a halogen, $C_{1-12}$ alkoxy, or $C_{1-12}$ alkyl, and t and u are each independently integers of 0 to 4. It will be understood that when t or u is less than 4, the valence of each carbon of the ring is filled by hydrogen. Also in formula (14), $X^c$ is a bridging group connecting the two hydroxy-substituted aromatic groups, where the bridging group and the hydroxy substituent of each $C_6$ arylene group are disposed ortho, meta, or para (specifically para) to each other on the $C_6$ arylene group. In an embodiment, the bridging group $X^c$ is single bond, -O-, -S-, -S(O)-, $-S(O)_2-$, -C(O)-, or a $C_{1-18}$ organic group. The $C_{1-18}$ organic bridging group can be cyclic or acyclic, aromatic or non-aromatic, and can further comprise heteroatoms such as halogens, oxygen, nitrogen, sulfur, silicon, or phosphorous. The $C_{1-18}$ organic group can be disposed such that the $C_6$ arylene groups connected thereto are each connected to a common alkylidene carbon or to different carbons of the $C_{1-18}$ organic bridging group. In an embodiment, w is 0 or 1, t and u is each 0, and $X^c$ is isopropylidene.

Specific poly(arylene ether-sulfone)s include polyethersulfone (also known as "PES" or "PESU"), which contains greater than or equal to 85 wt.% of units of formula (2a)

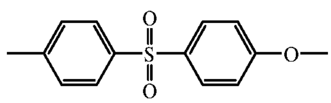

(2a)

or polyphenylene sulfone (also known as "PPSU) "), which contains greater than or equal to 85 wt.% of units of formula (2b)

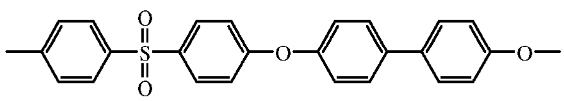

(2b)

or polyethersulfone, which contains greater than or equal to 85 wt.% of units of formula (2c)

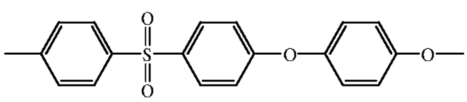

(2c)

or polysulfone (often referred to as "PSU") , which contains greater than or equal to 85 wt.% of units of formula (2d)

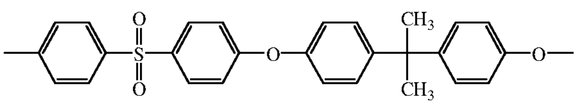

(2d)

or a combination comprising at least one of the foregoing poly(arylene ether-sulfone)s. Copolymers comprising a combination of at least two types of units of formulas (2a), (2b), (2c), or (2d) can also be used.

The poly(arylene ether-sulfone)s can be linear or branched, having 1 or more, 2 or more, or 5 or more branching points per 1,000 carbon atoms along the polymer chain. In an embodiment, the poly(phenylsulfone)s are linear, having 10 or fewer, 5 or fewer, 2 or fewer, or 1 or fewer branching points per 1,000 carbon atoms along the polymer chain. In some embodiments, the poly(arylene ether-sulfone) has a glass transition temperature (Tg) of greater than about 175°C, specifically from about 200°C to about 280°C, and more specifically from about 255 °C to about 275°C. The poly(arylene ether-sulfone)s can further have a weight average molecular weight (Mw) of about 500 to about 100,000 grams/mole (g/mol), specifically about 1,000 to about 75,000 g/mol, more specifically about 1,500 to about 50,000 g/mol, and still more specifically about 2,000 to about 25,000 g/mol.

Exemplary poly(arylene ether-sulfone)s that can be used include those that are available from sources such as Solvay Specialty Polymers, BASF, UJU Mew Materials Co. and Gharda Chemicals. Commercial grades of poly(phenylsulfone)s include those with the trade names RADEL™, UDEL™, ULTRASON™, PARYLS™ and GAFONE™. Polyethersulfones are commercially available from Solvay Advanced Polymers K.K. under the trademark of Veradel™, from BASF Corporation under the trademark of Ultrason™, and from Sumitomo Chemical Co., Ltd. under the trademark of Sumika Excel™. Any miscible mixture of poly(arylene ether-sulfones) can be used. Some poly(arylene ether-sulfone)s are described in ASTM D6394-14, a standard classification system for polysulfone materials.

Other high Tg amorphous thermoplastics that can be used include cyclic olefin copolymers (COC) made, for example, by polymerization of ethylene with cyclic olefins such as norbornene or cyclopentadiene dimer. Such polymers often have Tg above 130°C, are described in US patents 5,191,026 and 6,008,298 and are commercialized under trade names TOPAS™, APEL™, ZENOR™ and ARTON™ resins. The COC resins have very low moisture absorption and are good electrical insulators in high voltage applications.

Another class of high Tg amorphous thermoplastics that can be used include imidized poly acrylates and imidized polymethacrylates (PMMI), for example N-methyl glutarimide acrylic copolymers formerly sold as KAMAX™ resin and now sold as PLEXIMID™ polymer by Evonik. Such polymers often have Tg above 130°C and are described in US patents 5,225,496 and 5,096,968.

An additive composition can be used comprising one or more additives selected to achieve a desired property, with the proviso that the additive(s) are also selected so as to not significantly adversely affect a desired property of the thermoplastic composition and film forming process. The additive composition or individual additives can be mixed at a suitable time during the mixing of the components for forming the composition. The additive composition can include antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, radiation stabilizer, flame retardant, or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition can be 0.001 to 10.0 wt%, or 0.01 to 5 wt%, each based on the total weight of the polymer in the composition.

In some embodiments the amorphous thermoplastic composition comprises less than 10 parts per million (ppm) of pigments, colorants, or a combination thereof. In some embodiments the amorphous thermoplastic composition comprises less than or equal to 10 ppm of carbon black. In some embodiments the amorphous thermoplastic composition comprises less than or equal to 10 ppm titanium dioxide. In some embodiments the amorphous thermoplastic composition comprises less than or equal to 10 ppm of carbon black and titanium dioxide combined. In some embodiments the amorphous thermoplastic composition is free of glass fibers and results in a film that is also free of glass fibers.

In some embodiments the amorphous thermoplastic composition comprises polyetherimide, polycarbonate, or a poly(arylene-ether sulfone) each having less than 20 ppm of phenolic end groups. High phenolic end groups can, in some instances, be detrimental to aging of the polymer at high temperature in end use applications showing reduced mechanical properties over time. Phenolic end groups of the polymer may be measured by known techniques such as titration, infrared spectroscopy (IR), and nuclear magnetic resonance (NMR). In one instance P-NMR analysis using phosphorous functionalization of end groups can be used to characterize the resins. For example the resin can be dissolved in $CDCl_3$ with pyridine and chromium acetylacetonate (CrAcAc) and the phenolic hydroxyl groups are phosphorylated with o-phenylene phosphorochloridite to enhance the NMR signal of the phosphorous containing derivative of the phenolic group.

In some embodiments the polymer will be free of benzylic protons, than is having a less than 50 ppm benzylic protons in the polymer structure. At high melt temperatures for example >300°C, polymers with such benzylic protons are often less stable showing changes in melt viscosity leading to inferior films and poor process control. Benzylic protons can be determined by chemical analysis for example proton nuclear magnetic resonance (H-NMR) spectroscopy.

The amorphous thermoplastic composition is melt filtered to remove foreign material, carbonized particles, cross-linked resin, or similar impurities. Melt filtering can occur during initial polymer isolation, in a subsequent step, or both. Melt filtering can be performed using a filter with pore size sufficient to remove particles with a dimension of greater

than or equal to (≥) 50 micrometers, or with a pore size sufficient to remove particles with a dimension of greater than or equal to 40 micrometers, or with a pore size sufficient to remove particles with a dimension of greater than or equal to 10 micrometers.

After melt filtering the molten amorphous thermoplastic composition is extruded through a die to form strands (sometimes referred to as the extrudate). In some instances the strands will have a circular cross section of from 0.5 to 4.0 millimeters The amorphous thermoplastic composition is extruded at a temperature $T_E$ described in Equation A:

$$T_g + 250 \geq T_E \geq T_g + 100°C \qquad (A).$$

The strands are cooled to a temperature $T_c$ described by Equation B:

$$T_g - 30 \geq T_C \geq 20°C \qquad (B),$$

and are cut to form pellets of the desired size.

For purposes of this application, the term "pellet" should be interpreted as referring to a solid material having a minimum length in at least one dimension of greater than or equal to 2 millimeters (mm). In some embodiments the pellets have a length of 2.0 to 6.0 millimeters. In some embodiments the pellets can have a diameter of 0.5 to 4.0 millimeters. The pellet diameter is less than or equal to the pellet length. Pellet size can be measured by any conventional method including physical measurement of a representative group of pellets using a ruler or caliper. Pellet size can also be measured by sieving pellets through a mesh or screen of a known dimension using, for example, ASTM method D136. When referring to a mixture of solids of varying sizes, the mixture should be considered to be made of pellets if greater than or equal to 90% of the mixture is retained on a 10 mesh (2.0 mm) screen, while powder will not be retained to the same extent. Thermoplastic pellets will have a high bulk density that is greater than that of powder. In some instances, the pellet bulk density will be from 0.50 to 0.90 grams per cubic centimeter (g/cc). Bulk density can be measured in any of various methods known in the art for example ASTM D1895 test methods B and C. The pellet(s) can be of any angular shape or form. For example, the pellets can be in the shape of cylinders, cubes, hemispheres, chunks, rectangles, parallelograms or irregular angular shapes. Angular shaped pellets may facilitate handling by having less tendency for fluid flow than spheres or ovoids, they may also show more friction on extrusion in a screw driven melt processing equipment with better feeding and melting. However due to their angular edges cylindrical pellets maybe be more prone to generating the fines that lead to thin film defects. Fines can be not only be generated during manufacturing but also during handling and transport of such angular pellets. Fines removal for thin thermoplastic films film will be especially important when using cylindrical pellets, diced cubes or ground recycled parts or sheet that tend to be irregular and angular. In some instances, the pellets will be cylinders that are on average 2 mm to 6 mm long and 0.5 mm to 4 mm in diameter. In some instances it can be beneficial to mix small and large pellets together. In yet other instances it can be beneficial to have pellets with at least one sharp angular face, for example cubes and cylinders, rather than spheres or ovoids. In some embodiments the pellets have at least one angular face wherein the surfaces defining the angular face meet at an angle of 60 to 120 degrees. In some embodiments the pellets will have an angular face wherein the surfaces meet at an angle of 80 to 100 degrees.

In some embodiments an injection molded part made from the pellets will have a Rockwell M hardness of 70 to 120 as measured by ASTM method D785-08. Cylindrical pellets comprising resins of high hardness, such as polycarbonate, polyetherimide and polysulfones, may be more prone to breaking and generating fines during manufacture, handling and shipment than softer pellets.

It was further discovered that the generation of fines can be reduced by chopping the extrudate strands at a temperature $T_c$ to form pellets. If the thermoplastic polymer is hard and brittle (Notched Izod <2 ft-lbs/in), a low temperature may produce more fines, but if cut too hot the thermoplastic polymer may distort and stick to itself or the chopper. Higher temperatures allow faster line speed and higher production rates. The temperature, $T_c$, for cutting the extrudate strands should be above 20°C, or, above 50°C.

Even when pellets are cut as described above there may still be a portion of the pellets that have an attachment which can be, for example, a small thin area, an incomplete cut or other imperfection at the edge of the pellet. On further handling, these attachments can break off generating more fines. These attachments can be reduced or eliminated by subjecting the pellets to mechanical stress comprising at least one of transport, vibration, agitation, and shaking, to break off the attachments. The mechanical stress can be applied at a temperature Ts in accordance with Equation C:

$$T_g\text{-}10\ °C \geq T_S \geq 20\ °C. \quad (C).$$

In some embodiments the pellets are subjected to agitation for greater than or equal to one minute, or greater than or equal to 90 seconds. Agitation may be for less than 2 minutes. Agitation methods can include pellet to pellet impingent, tumbling, pipe transfer, contact with vessel walls, impeller, baffles or other mixing devices and combinations thereof.

Fines are removed from the pellets by one or more separation techniques. Separation techniques include cyclone separation, vortex separation, vibration screening, air washing, water washing, fluidized bed treatment, pneumatic material separation, hydro-cyclone separation, electro static separation or any combination thereof. Air or water or air/water mixtures may be used. If water is used in the separation technique the water can have a pH of 5.0 to 7.5. In some instances, the water will have pH of 6.0 to 7.0. In some embodiments the pellets can also be subjected to optical sorting to remove one or more of the following contaminants: carbonized resin, minerals, metal, dirt, salts or other inorganic contaminants, organic fibers, paper, cardboard cotton, and pellets with standard heterogeneous contaminants such as pellets with black specks. Optical sorting may remove sortable material based on differences in ultraviolet, visible, and infrared wavelengths, or any combination of the three. While optical sorting is useful in producing a high-quality thermoplastic film by removing heterogeneous contaminants that differ in chemical composition from the thermoplastic, optical sorting does not remove the chemically identical fines. Pellets may also be subjected to magnetic and electrical sorting to remove any metallic contamination. Any combination of optical, magnetic and electrical sorting may also be used.

In some embodiments the fines separation comprises the water slurry process. In the water slurry process a perforated chamber (cone, belt or other chamber), with holes at least 20% smaller than the average pellet diameter, is filled with the high Tg thermoplastic resin pellets. While the chamber is rotating under a spray of water, or holding pellets immersed in water; incipient fines break off the pellets while adhering resin fines, dust and other contaminants also separate from the pellets. In some instances, the water will have pH of 5.0 to 7.5. In some instances the water will have pH of 6.0 to 7.0. In some instances filtration of the water will remove particles as small as 0.5 micrometers. Pellets, when separated from the water which has removed fines, chaff and other contaminants, can be dried in a portion of the chamber where there is no water spray, or they can be dried by other methods of pellet drying such as air flow, suction drying or heating. Other methods of slurrying the thermoplastic pellets with water under some mechanical and/or sonic agitation followed by removal of water contained with the fines may also be used.

In some embodiments fines separation comprises baffle sorting wherein the high Tg thermoplastic pellets fall onto a series of angled plates or baffles which are subject to an orthogonal or counter flow of air. The air will remove fines, chaff and other contaminants from the pellets while the impingement of the falling pellets against the baffles will break off incipient fines. In some instances baffle sorters will have 4 to 10 plates. In some instances the baffles may be perforated with holes at least 20% smaller than the average pellet diameter. In some instances the air flow will be adjusted to match the bulk density of the high Tg thermoplastic pellets with air pressure increasing with higher pellet density. Other methods of fines separation include elutriation in a fluid bed separator or counter flow elutriator wherein a continuous flow of pellets is exposed to a counter flow of air in a chamber allowing for fines and chaff diversion from the pellet stream. In in some instances the chamber may be a specially designed baffled chamber, for example a horizontal fluid bed separator. In other instances fines separation may be achieved by a gravity rotation separator, horizontal drum sieve, aspirator or scalperator. Any combination of fines separation methods, including mechanical and electrostatic may be used to remove adhering and incipient fines from the high Tg thermoplastic pellets. In some instances fines separation can be achieved using air or inert gases such as nitrogen or argon. Note that simple screening, even using a vibrating screen and gravity separation is not fully sufficient to remove all chaff and fines. Residual fines can be measured using a wet or dry method, for example, ASTM D7486-14 a wet method to measure fines of 500 micrometers or smaller, or ASTM D1921 to measure fines from 500 to 2000 micrometers. After fines removal, pellets, especially cylindrical and cubic pellets, should be subjected to minimal handling to avoid the generation of further fines before conversion into film.

In some embodiments the pellets are dried after treating to remove fines and before melting the pellets to form a film. The pellets can be dried for greater than or equal to one hour at a temperature $T_d$ represented by the Equation E

$$Tg\text{-}20\ ^\circ C \geq T_d \geq Tg\text{-}200\ ^\circ C \qquad (E)$$

The treated pellets are then melted and formed into a film using a melt process. Typically the pellets are melted to form a molten composition at a temperature $T_p$ defined in Equation D:

$$T_g + 250 \geq T_p \geq T_g + 100^\circ C \qquad (D);$$

The molten composition can then be melt cast, extruded or blown to form a film. Melt extrusion may comprise extruding the molten amorphous thermoplastic composition through a flat die to form a film having an average thickness less than

or equal to 50 micrometers. The film may be stretched by relatively high take up speeds and then cooled. The composition can be extruded using extruders conventionally used for thermoplastic compositions using a flat die. The extruder may be of the single- or twin-screw design, and a melt pump may also be used to provide a constant, non-pulsating flow of polymer through the die. The die lip gap will vary depending on the type of extrusion die used, for example choker bar, coat hanger, flex membrane or flex lip. In some instances the die gap will be up to 40% greater than the thickness of the film. In other instances larger gaps can be used when the film is drawn down to its final thickness using calendaring rolls or casting roll techniques. The take-up rollers may operate at speeds of up to 200 meters/minute. The design may also include the addition of a heated roll to temper/anneal the film and thus minimize the occurrence of frozen-in internal stresses. The edges of the film are often trimmed, and the film wound up on a roll using a tension-controlled winding mechanism. In some embodiments the film is polished on both sides.

The film has an average thickness less than or equal to 50 micrometers, or less than or equal to 25 micrometers. In some embodiments the film has an average thickness of 1 to 10 micrometers. The film can have an average surface roughness (Ra) that is less than 0.15 micrometers. Surface roughness can be measured, for example, by a surface profilometer technique as described in ISO method 4287. In some embodiments the film has no surface texturing and an average thickness variation less than 20% of the average film thickness, or less than 15% of the average film thickness.

The film can have a visible light transmission (%T) greater than 80% (at 1 millimeter thickness) as measured by ASTM D1003-08 with the specular component included.

The film can have a moisture absorption less than 2 wt%, based on the total weight of the film, after 24 hours at 50% relative humidity (RH) at 23 °C. In other instances moisture absorption after 24 hours at 50% RH will be 1% or less. The film has less than 10 inclusions per 100 square centimeters, or less than 5 inclusions per 100 square centimeters, as determined by visual inspection as described in the Examples. Film quality may also be evaluated by ASTM methods D7310-11 or D5213-12.

The film described in the preceding paragraphs can be used in an electrical capacitor, transformer, motor, wire coating, tape, insulator or other electrical device. The film may further comprise a metallic coating. The metal employed in the coating may include aluminum, silver, gold, nickel, tin, palladium, platinum, copper, and alloys comprising at least one of the foregoing elements. Any known method for forming or adhering a metal coating on a thermoplastic film may be employed. Such methods include sputtering, vacuum metal deposition, vapor arc deposition, plasma chemical vapor deposition, thermal vapor metal deposition, and ion plating. Often the films are well suited for direct application of a metal coating, however it is also possible to pre-coat the film with a primer before applying the metal coating. In some instances it is also advantageous to further coat the metalized film with an additional layer to protect the metal surface from scratching, oxidation, or related problems. Metal oxides or silicone-derived clear coats, for example deposited by plasma based silicone polymerization, are possible.

This disclosure is further illustrated by the following examples, which are nonlimiting.

## EXAMPLES

### Comparative Example 1:

Polyetherimide (PEI) having a weight average molecular weight of approximately 33,000 Daltons and a Tg of 215°C was combined with 0.01 weight percent tris (di t-butyl phenyl) phosphite and extruded into pellets. The cylindrical pellets were then melt extruded to form a 5 micrometer thick film that was polished on both sides. Inclusions 10 were seen in the film as shown in FIGS 1 and 2. FTIR (micro Fourier Transform Infra-Red) spectra (FIGS 3 and 4) of the starting PEI pellet, the film and both inclusions show that they are the same material. In FIG. 3 the FTIR spectra of the PEI pellet is 40, the FTIR spectra of the first inclusion is 50, the FTIR spectra of the PEI film is 60, and the FTIR spectra of the second inclusion is 70. FIG. 4 is an expanded view of the fingerprint section of the spectra shown in FIG. 3 and the spectra are numbered the same as in FIG. 3.

### Comparative Example 2:

A polyetherimide having a Tg of 215°C, a weight average molecular weight of 33,000 Daltons with less than 20 parts per million (ppm) of phenolic end groups and less than 100 ppm of residual o-dichloro benzene was extruded at 360°C and greater than 200 rotations per minute (rpm) on a 53 millimeter (mm) co-rotating twin screw extruder through an 40 micrometer melt filter. The polymer is free (less than 10 ppm) of benzylic protons. The melt was then passed simultaneously through a multiplicity of circular 3 mm dies to form continuous cylindrical strands which were cooled by pulling through a water bath at about 40 °C and fed into a chopper using a puller roll and rotating knife bed, run at about 100 rpm, to form a distribution of cylindrical pellets about 2 mm to 6 mm long and 0.5 mm to 4 mm in diameter. These pellets also contain approximately 1 weight percent of fines and chaff, some of which was removed using a vibrating screen. The water bath had a pH of about 6.5 to 6.9.

This material was transported from the chopper using metal pipes with pneumatic conveying (which generated more fines) and was packaged. Prior to transport the pellets were subject to magnetic separation to remove external metal contamination.

The pellets were dried for 4 hours at 150°C and melted at 365°C in a 30 mm single screw extruder, at 16 rpm, using a melt pump for constant pressure, extruded through a 450 mm wide die and made into a film having a thickness of 5 micrometers.

Inclusions were measured by visual inspection of the film. Visual inspection was performed using a light table. A 10 cm x 10 cm (100 $cm^2$) piece of film was cut from the roll and visually inspected for about 3 minutes from a distance of two feet by a viewer having 20/20 vision. The number of inclusions was enumerated. The film had >10 inclusions per 100 square centimeters of film.

Example 1:

The pellets of Comparative Example 2 were subjected to air classification in a cyclone type mechanism with good pellet-pellet impingement. The generated and adhering fines were removed from the larger heavier pellets. The pellets are also exposed to an electrical field to reduce static charge.

The clean pellets with fines and chaff removed, and incipient fines knocked off from the angular edges of the pellets and removed, were then subject to optical sorting to remove heterogeneous contaminants inside of the pellets (internal contamination). After optical sorting, the pellets were packaged with minimal conveying in a class 1000 clean room.

The cleaned and optically sorted pellets were dried for 4 hours at 150°C and melted at 365°C in a 30 mm single screw extruder, at 16 rpm, using a melt pump for constant pressure, extruded through a 450 mm wide die and made into a film having a thickness of 5 micrometers. Inclusions were measured as described in Comparative Example 2. The film had a low number of inclusions, less than 5 inclusions per 100 square centimeters of film.

Only the pellets with both internal contaminants and external fines removed made a thin film with a low number of defects, less than 5 inclusions per 100 square centimeters of film. A similar melt filtered PEI film that did not have external and incipient fines removed had more than double the levels of defects (>10 inclusions per 100 square centimeters of film). Films made from pellets without either melt filtering or fines and incipient fines removal had a much higher defect level: > 30 inclusions per 100 square centimeters. Likewise pellets that made with just melt filtering and with no optical sorting also made thin films with higher levels of defects.

Comparative Example 3:

A polyetherimide as described above was mixed with approximately 1100 ppm of a blue colorant or a red colorant, extruded at 360 °C and formed into strands. The strands were cooled in a 40 °C water bath and chopped to make pellets. To intentionally create fines, the colored resultant pellets were first combined by compression molding into blocks using a hot press at 360°C. These colored blocks were then ground against a metal file to generate fine powders, 5 g of each color were collected through a 1 mm mesh screen. The blue or red fine grinds (0.1 wt.%) were mixed with 99.9 wt.% polyetherimide cylindrical pellets, dried for 4 hours at 150°C and injection molded into 3.2 x 102 mm discs at 340-360°C. Visual examination of the parts with a microscope showed a large number of red or blue inclusions in the parts. FIG. 5A shows the red inclusions 20 and FIG. 5B shows the blue inclusions 30 found within the molded PEI discs. Pictures are 1 mm square areas of the parts. Defects in both the red and blue case were still irregular. If the particles were partially melted, one would expect a more rounded, deformed shape from shear flow and mixing. Despite the > 2.5 minute residence time at 125 to 140°C above the polyetherimide resin Tg in the molding machine, and the shear of resin between the screw and barrel during the injection molding process, the fines did not fully melt and mix, and remained as separate inclusions. In normal part molding uncolored fines would be invisible because they would be pressed into the matrix and since they are chemically identical they would have the same optical properties (e.g., refractive index). In extruded or blow molded thin films, where the fines are similar in size to the thickness of the film (greater than or equal to 10% of the film thickness), and as opposed to injection molding, there is no high pressure packing to consolidate them, they appear as defects and inclusions in the film.

Example 2:

A bisphenol A polycarbonate (PC) having a Tg of 148°C, a weight average molecular weight of 28,000 Daltons with less than 20 parts per million (ppm) of phenolic end groups and capped with p-tert butyl phenol was extruded at 300°C and greater than 200 rotations per minute (rpm) on a 53 millimeter (mm) co-rotating twin screw extruder through a 40 micrometer melt filter. The polymer was free (less than 10 ppm) of benzylic protons. The melt was then passed simultaneously through a multiplicity of circular 3 mm dies to form continuous cylindrical strands which were cooled by

pulling through a water bath at about 40°C and fed into a chopper using a puller roll and rotating knife bed, run at about 100 rpm, to form a distribution of cylindrical pellets about 2 mm to 6 mm long and 0.5 mm to 4 mm in diameter. These pellets also contain approximately 1 weight percent of fines and chaff, some of which was removed using a vibrating screen.

This material was transported from the chopper using metal pipes with pneumatic conveying (which generated more fines) and was packaged. Prior to transport the pellets were subject to magnetic separation to remove external metal contamination. The PC pellets were subjected to air classification in a cyclone type mechanism with good pellet-pellet impingement. The generated and adhering fines were removed from the larger heavier pellets. The pellets were also exposed to an electrical field to reduce static charge.

The PC pellets were dried for 4 hours at 125°C and melted at about 300°C in a 2.0 inch single screw extruder, 30:1 l:d, at about 20 rpm, extruded through a 450 mm wide die and made into a film having a thickness of 20 micrometers.

Inclusions were measured by visual inspection of the film. Visual inspection was performed using a light table. A 10 cm × 10 cm (100 $cm^2$) piece of film was cut from the roll and visually inspected as described in Comparative Example 2. The film had <5 inclusions per 100 square centimeters of film.

Comparative Example 4:

The PC fines that had been separated from the PC pellets in Example 4 were collected and analyzed. PC fines had an average length of about 0.5 mm with an average diameter of about 0.2 mm and were identical in chemical composition to the PC pellets as judged by infrared and proton NMR spectroscopy. During a film extrusion as described in Example 4 about 15 grams of the PC fines were added to the feed throat of the extruder. Within less than 2 minutes the resultant 20 mm film was heavily contaminated with defects and inclusions that were shown to be unmelted PC fines. The film had >25 inclusions per 100 square centimeters of film. In about 15 minutes of continued film extrusion using pellets having fines removed as described in Example 4, with no further addition of fines, the film regained its defect free condition with less than 5 inclusions per 100 square centimeters of film. This conclusively showed that the small, chemically identical PC fines, were not melting even at high temperature in a long extruder.

The Examples and Comparative Examples, taken together, show that inclusions found in thin films are the same material as the film itself and are the result of unmelted fines present in the extrusion melt composition. Removal of the fines prior to melt extrusion of the film resulted in a marked decrease in the number of inclusions.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl ($-HC=CH_2$)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene ($-CH_2-$) or, propylene ($-(CH_2)_3-$)). "Cycloalkylene" means a divalent cyclic alkylene group, $-C_nH_{2n-x}$, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an

arylene group substituted with an alkyl group. "Arylalkylene" means an alkylene group substituted with an aryl group (e.g., benzyl). The prefix "halo" means a group or compound including one more of a fluoro, chloro or bromo, substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a $C_{1-9}$ alkoxy, a $C_{1-9}$ haloalkoxy, a nitro ($-NO_2$), a cyano (-CN), a $C_{1-6}$ alkyl sulfonyl ($-S(=O)_2$-alkyl), a $C_{6-12}$ aryl sulfonyl ($-S(=O)_2$-aryl)a thiol (-SH), a thiocyano (-SCN), a tosyl ($CH_3C_6H_4SO_2$-), a $C_{3-12}$ cycloalkyl, a $C_{2-12}$ alkenyl, a $C_{5-12}$ cycloalkenyl, a $C_{6-12}$ aryl, a $C_{7-13}$ arylalkylene, a $C_{4-12}$ heterocycloalkyl, and a $C_{3-12}$ heteroaryl instead of hydrogen, provided that the substituted atom's normal valence is not exceeded. The number of carbon atoms indicated in a group is exclusive of any substituents. For example $-CH_2CH_2CN$ is a $C_2$ alkyl group substituted with a nitrile.

Unless substituents are otherwise specifically indicated, each of the foregoing groups can be unsubstituted or substituted, provided that the substitution does not significantly adversely affect synthesis, stability, or use of the compound. "Substituted" means that the compound, group, or atom is substituted with at least one (e.g., 1, 2, 3, or 4) substituents instead of hydrogen, where each substituent is independently nitro ($-NO_2$), cyano (-CN), hydroxy (-OH), halogen, thiol (-SH), thiocyano (-SCN), $C_{1-6}$ alkyl, $C_{2-6}$ alkenyl, $C_{2-6}$ alkynyl, $C_{1-6}$ haloalkyl, $C_{1-9}$ alkoxy, $C_{1-6}$ haloalkoxy, $C_{3-12}$ cycloalkyl, $C_{5-18}$ cycloalkenyl, $C_{6-12}$ aryl, $C_{7-13}$ arylalkylene (e.g., benzyl), $C_{7-12}$ alkylarylene (e.g, toluyl), $C_{4-12}$ heterocycloalkyl, $C_{3-12}$ heteroaryl, $C_{1-6}$ alkyl sulfonyl ($-S(=O)_2$-alkyl), $C_{6-12}$ arylsulfonyl ($-S(=O)_2$-aryl), or tosyl ($CH_3C_6H_4SO_2$-), provided that the substituted atom's normal valence is not exceeded, and that the substitution does not significantly adversely affect the manufacture, stability, or desired property of the compound. When a compound is substituted, the indicated number of carbon atoms is the total number of carbon atoms in the compound or group, including those of any substituents.

## Claims

**1.** A method of making an extruded film comprising:

melt filtering an amorphous thermoplastic composition comprising an amorphous thermoplastic polymer with a glass transition temperature $T_g$ of 130ºC to 280ºC, 150 ºC to 250 ºC, or, 160 ºC to 230 ºC, as determined by differential scanning calorimetry to form a melt filtered amorphous thermoplastic composition;
extruding the melt filtered amorphous thermoplastic composition into strands at a temperature $T_E$ represented by the Equation A

$$T_g + 250 \geq T_E \geq T_g + 100ºC \qquad (A);$$

cooling the strands to a temperature $T_C$ represented by the Equation B

$$T_g - 30 \geq T_C \geq 20ºC \qquad (B)$$

to form cooled strands;
cutting the cooled strands into pellets having a length of 2.0 to 6.0 millimeters or 3.0 to 5.0 millimeters;
treating the pellets by cyclone separation, vortex separation, vibration screening, air washing, water washing, fluidized bed treatment, pneumatic material separation, hydro-cyclone separation, electro static separation, or any combination thereof at a temperature Ts represented by the Equation C

$$T_g\text{-}10\ ºC \geq T_S \geq 20ºC \qquad (C)$$

to remove particulates of the amorphous thermoplastic composition having at least one of length, width, and height of less than 0.5 millimeters to form treated pellets;
melting the treated pellets in an extruder at a temperature $T_p$ represented by Equation D

$$T_g + 250 \geq T_p \geq T_g + 100ºC \qquad (D);$$

to form a molten composition; and
extruding the molten composition through a flat die to form a film having an average thickness less than or equal to 50 micrometers.

**2.** The method of claim 1, further comprising drying the pellets for greater than or equal to one hour at a temperature $T_d$ represented by Equation E

$$T_g\text{-}20\ ºC \geq T_d\ .\ \geq T_g\text{-}200\ ºC \qquad (E)$$

after treating the pellets and before melting the treated pellets.

**3.** The method of claim 1 or 2, further comprising optically sorting the pellets and removing pellets comprising foreign contaminants prior to melting.

**4.** The method of claim 3, wherein the pellets have a diameter of 0.5 to 4.0 millimeters and the diameter of the pellet is less than the length.

**5.** The method of any one of claims 1 to 4, wherein the pellets comprise polyetherimide, polycarbonate, poly(arylene-ether sulfone), or a miscible mixture comprising any of the foregoing.

**6.** The method of claim 5, wherein the amorphous thermoplastic composition comprises a polyetherimide, polycarbonate, or a poly(arylene-ether sulfone) each having less than 20 ppm of phenolic endgroups.

**7.** The method of any one of claims 1 to 6, wherein an injection molded part made from the pellets have a Rockwell M hardness as measured by ASTM method D785-08 of 70 to 120.

**8.** The method of any one of claims 1 to 7, wherein greater than 99.9 weight percent of the pellets have a length, width and height that is greater than or equal to 0.5 millimeters.

**9.** The method of any one of claims 1 to 8, wherein treating the pellets comprises agitating the pellets by pellet to pellet impingement, tumbling, pipe transfer, contact with vessel walls, impeller, baffles, or other mixing devices and combinations thereof, for greater than or equal to one minute, or greater than or equal to 90 seconds.

**10.** The method of any one of claims 1 to 9, wherein the pellets are washed with water having a pH of 5.0 to 7.5, or 6.0 to 7.0.

**11.** An extruded film produced by the method of any one of claims 1 to 10, **characterized in that** the film has less than 10 inclusions of the amorphous thermoplastic composition per 100 square centimeters, or less than 5 inclusions per 100 square centimeters.

**12.** An electrical capacitor comprising the extruded film according to claim 11, having a thickness of 1 to 10 micrometers and less than 10 inclusions per 100 square centimeters wherein the amorphous thermoplastic polymer has a glass transition temperature of 150°C to 250°C.

**Patentansprüche**

**1.** Verfahren zur Herstellung einer extrudierten Folie, mit:

Schmelzfiltrieren einer amorphen thermoplastischen Zusammensetzung, aufweisend ein amorphes thermoplastisches Polymer mit einer Glasübergangstemperatur $T_g$ von 130°C bis 280°C, 150°C bis 250°C oder 160°C bis 230°C, bestimmt durch Differenz-Scanning-Kalorimetrie, um eine schmelzfiltrierte amorphe thermoplastische Zusammensetzung auszubilden;
Extrudieren der schmelzfiltrierten amorphen thermoplastischen Zusammensetzung zu Strängen bei einer Temperatur $T_E$, dargestellt durch die Gleichung A

$$T_g + 250 \geq T_E \geq T_g + 100°C \qquad (A);$$

Abkühlen der Stränge auf eine Temperatur $T_C$, dargestellt durch die Gleichung B

$$T_g - 30 \geq T_C \geq 20°C \qquad (B)$$

um gekühlte Stränge auszubilden;
Schneiden der gekühlten Stränge in Pellets mit einer Länge von 2,0 bis 6,0 Millimeter oder 3,0 bis 5,0 Millimeter;
Behandeln der Pellets durch Zyklontrennung, Wirbeltrennung, Vibrationssiebung, Luftwäsche, Wasserwäsche, Wirbelschichtbettbehandlung, pneumatische Materialtrennung, Hydrozyklontrennung, elektrostatische Trennung oder eine beliebige Kombination davon bei einer Temperatur Ts, dargestellt durch die Gleichung C

$$T_g\text{-}10°C \geq T_S \geq 20°C \qquad (C)$$

um Partikel der amorphen thermoplastischen Zusammensetzung zu entfernen, die zumindest eine der Dimensionen, Länge, Breite und Höhe von weniger als 0,5 Millimeter aufweisen, um behandelte Pellets auszubilden;
Schmelzen der behandelten Pellets in einem Extruder bei einer Temperatur $T_P$, dargestellt durch Gleichung D

$$T_g + 250 \geq T_P \geq T_g + 100°C \qquad (D);$$

um eine geschmolzene Zusammensetzung auszubilden; und
Extrudieren der geschmolzenen Zusammensetzung durch eine flache Düse, um eine Folie mit einer durchschnittlichen Dicke von kleiner oder gleich 50 Mikrometer auszubilden.

**2.** Verfahren nach Anspruch 1, des Weiteren mit Trocknen der Pellets für mehr als oder gleich einer Stunde bei einer Temperatur $T_d$, dargestellt durch Gleichung E

$$T_g\text{-}20°C \geq T_d\,. \geq T_g\text{-}200°C \qquad (E)$$

nach der Behandlung der Pellets und vor dem Schmelzen der behandelten Pellets.

**3.** Verfahren nach Anspruch 1 oder 2, des Weiteren mit optischen Sortieren der Pellets und Entfernen von Pellets, die Fremdverunreinigungen aufweisen, vor dem Schmelzen.

**4.** Verfahren nach Anspruch 3, wobei die Pellets einen Durchmesser von 0,5 bis 4,0 Millimeter aufweisen und der Durchmesser der Pellets kleiner als die Länge ist.

**5.** Verfahren nach einem der Ansprüche 1 bis 4, wobei die Pellets Polyetherimid, Polycarbonat, Poly(arylenethersulfon) oder ein mischbares Gemisch aus einem der vorgenannten Stoffe beinhalten.

**6.** Verfahren nach Anspruch 5, wobei die amorphe thermoplastische Zusammensetzung ein Polyetherimid, Polycarbonat, Poly(arylenethersulfon) beinhaltet, die jeweils weniger als 20 ppm phenolische Endgruppen aufweisen.

**7.** Verfahren nach einem der Ansprüche 1 bis 6, wobei ein aus den Pellets hergestelltes Spritzgussteil eine Rockwell-M-Härte von 70 bis 120 aufweist, gemessen nach dem ASTM-Verfahren D785-08.

**8.** Verfahren nach einem der Ansprüche 1 bis 7, wobei mehr als 99,9 Gewichtsprozent der Pellets eine Länge, Breite und Höhe von größer oder gleich 0,5 Millimeter aufweisen.

**9.** Verfahren nach einem der Ansprüche 1 bis 8, wobei das Behandeln der Pellets das Rühren der Pellets durch Pellet-zu-Pellet-Aufprall, Taumeln, Rohrtransfer, Kontakt mit Behälterwänden, Flügelrad, Prallblechen oder anderen Mischvorrichtungen und Kombinationen davon für mehr als oder gleich einer Minute oder mehr als oder gleich 90 Sekunden aufweist.

**10.** Verfahren nach einem der Ansprüche 1 bis 9, wobei die Pellets mit Wasser mit einem pH von 5,0 bis 7,5 oder 6,0 bis 7,0 gewaschen werden.

**11.** Extrudierte Folie, hergestellt mittels dem Verfahren nach einem der Ansprüche 1 bis 10, **dadurch gekennzeichnet, dass** die Folie weniger als 10 Einschlüsse der amorphen thermoplastischen Zusammensetzung pro 100 Quadratzentimeter oder weniger als 5 Einschlüsse pro 100 Quadratzentimeter aufweist.

**12.** Elektrischer Kondensator mit der extrudierten Folie nach Anspruch 11, die eine Dicke von 1 bis 10 Mikrometer und weniger als 10 Einschlüssen pro 100 Quadratzentimeter aufweist, wobei das amorphe thermoplastische Polymer eine Glasübergangstemperatur von 150°C bis 250°C hat.

## Revendications

**1.** Procédé de fabrication d'un film extrudé comprenant :

la filtration par fusion d'une composition thermoplastique amorphe comprenant un polymère thermoplastique amorphe avec une température de transition vitreuse $T_g$ de 130°C à 280°C, 150°C à 250°C ou 160°C à 230°C, telle que déterminée par calorimétrie différentielle à balayage pour former une composition thermoplastique amorphe filtrée à l'état fondu ;
l'extrusion de la composition thermoplastique amorphe filtrée à l'état fondu en brins à une température $T_E$ représentée par l'équation A

$$T_g + 250 \geq T_E \geq T_g + 100°C \qquad (A) ;$$

le refroidissement des brins à une température $T_c$ représentée par l'équation B

$$T_g - 30 \geq T_c \geq 20°C \qquad (B)$$

pour former des brins refroidis ;
le découpage des brins refroidis en granulés ayant une longueur de 2,0 à 6,0 millimètres ou 3,0 à 5,0 millimètres ;
le traitement des granulés par séparation cyclonique, séparation tourbillonnaire, tamisage à vibrations, lavage à l'air, lavage à l'eau, traitement en lit fluidisé, séparation pneumatique de matériaux, séparation hydro-cyclonique, séparation électrostatique, ou toute combinaison de ce qui précède à une température $T_s$ représentée par l'équation C

$$T_g - 10°C \geq T_s \geq 20°C \qquad (C)$$

pour enlever des particules de la composition thermoplastique amorphe ayant au moins l'une parmi une longueur, une largeur et une hauteur de moins de 0,5 millimètre pour former des granulés traités ;
la fusion des granulés traités dans une extrudeuse à une température $T_p$ représentée par l'équation D :

$$T_g + 250 \geq T_p \geq T_g + 100°C \qquad (D) ;$$

pour former une composition fondue ; et
l'extrusion de la composition fondue à travers une filière plate pour former un film ayant une épaisseur moyenne inférieure ou égale à 50 micromètres.

**2.** Procédé selon la revendication 1, comprenant en outre le séchage des granulés pendant une durée supérieure ou égale à une heure à une température $T_d$ représentée par l'équation E

$$T_g - 20°C \geq T_d . \geq T_g - 200°C \qquad (E)$$

après le traitement des granulés et avant la fusion des granulés traités.

**3.** Procédé selon la revendication 1 ou 2, comprenant en outre le tri optique des granulés et l'enlèvement des granulés

comprenant des contaminants étrangers avant la fusion.

4. Procédé selon la revendication 3, dans lequel les granulés ont un diamètre de 0,5 à 4,0 millimètres et le diamètre du granulé est inférieur à la longueur.

5. Procédé selon l'une quelconque des revendications 1 à 4, dans lequel les granulés comprennent du polyétherimide, du polycarbonate, du poly(arylène-éther sulfone) ou un mélange miscible comprenant l'un quelconque des précédents.

6. Procédé selon la revendication 5, dans lequel la composition thermoplastique amorphe comprend du polyétherimide, du polycarbonate, ou du poly(arylène-éther sulfone) ayant chacun moins de 20 ppm de groupes terminaux phénoliques.

7. Procédé selon l'une quelconque des revendications 1 à 6, dans lequel une pièce moulée par injection fabriquée à partir des granulés a une dureté Rockwell M telle que mesurée par la méthode ASTM D785-08 de 70 à 120.

8. Procédé selon l'une quelconque des revendications 1 à 7, dans lequel plus de 99,9 pour cent en poids des granulés ont une longueur, une largeur et une hauteur supérieures ou égales à 0,5 millimètre.

9. Procédé selon l'une quelconque des revendications 1 à 8, dans lequel le traitement des granulés comprend l'agitation des granulés par collision entre granulés, le culbutage, le transfert de tubes, le contact avec des parois de récipient, une roue à aubes, des chicanes ou d'autres dispositifs de mélange et des combinaisons de ce qui précède, pendant une durée supérieure ou égale à une minute, ou supérieure ou égale à 90 secondes.

10. Procédé selon l'une quelconque des revendications 1 à 9, dans lequel les granulés sont lavés avec une eau ayant un pH de 5.0 à 7.5 ou de 6.0 à 7.0.

11. Film extrudé produit par le procédé selon l'une quelconque des revendications 1 à 10, **caractérisé en ce que** le film comporte moins de 10 inclusions de la composition thermoplastique amorphe par 100 centimètres carrés, ou moins de 5 inclusions par 100 centimètres carrés.

12. Condensateur électrique comprenant le film extrudé selon la revendication 11, présentant une épaisseur de 1 à 10 micromètres et moins de 10 inclusions par 100 centimètres carrés, dans lequel le polymère thermoplastique amorphe présente une température de transition vitreuse de 150°C à 250°C.

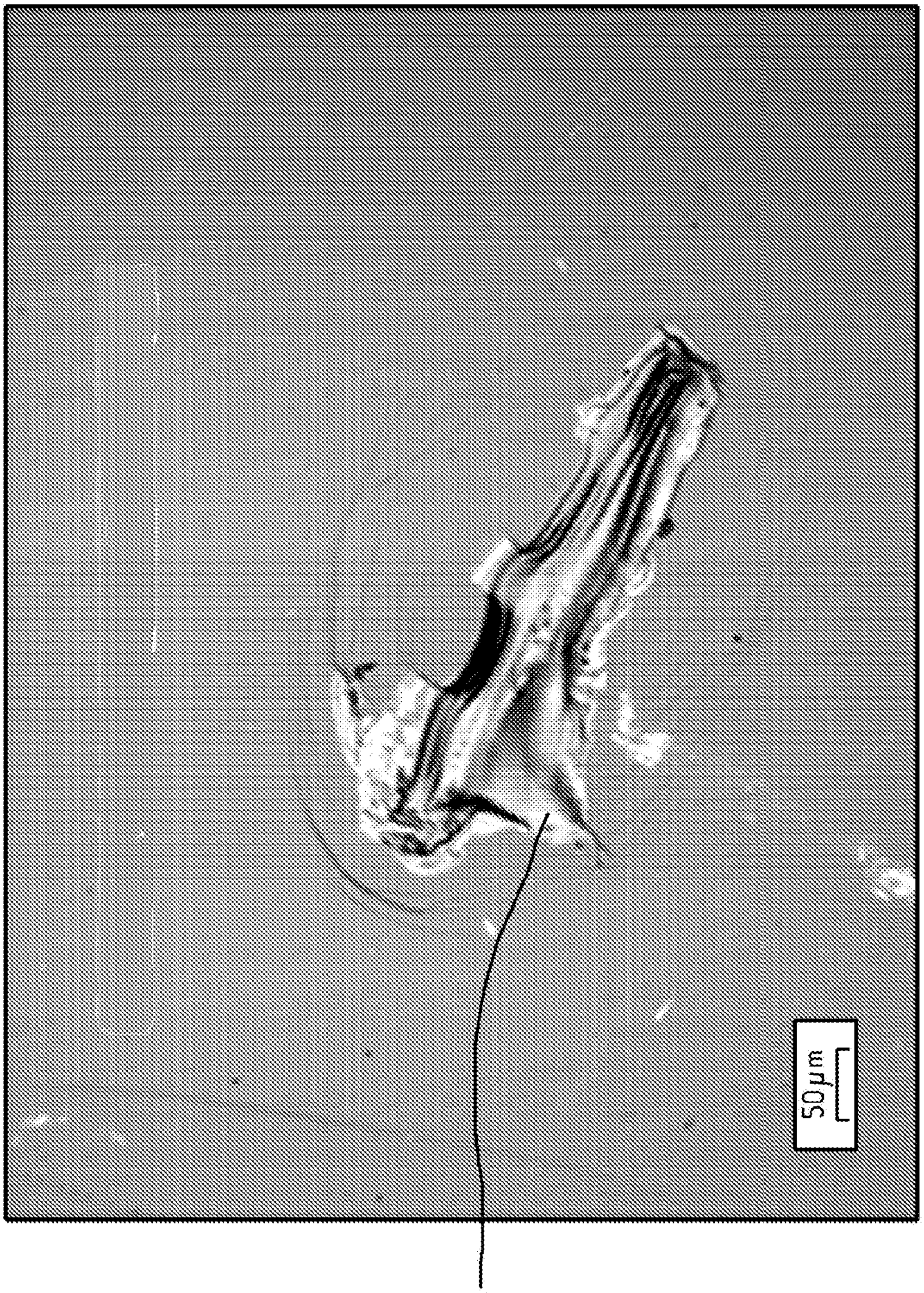


10

FIG 1

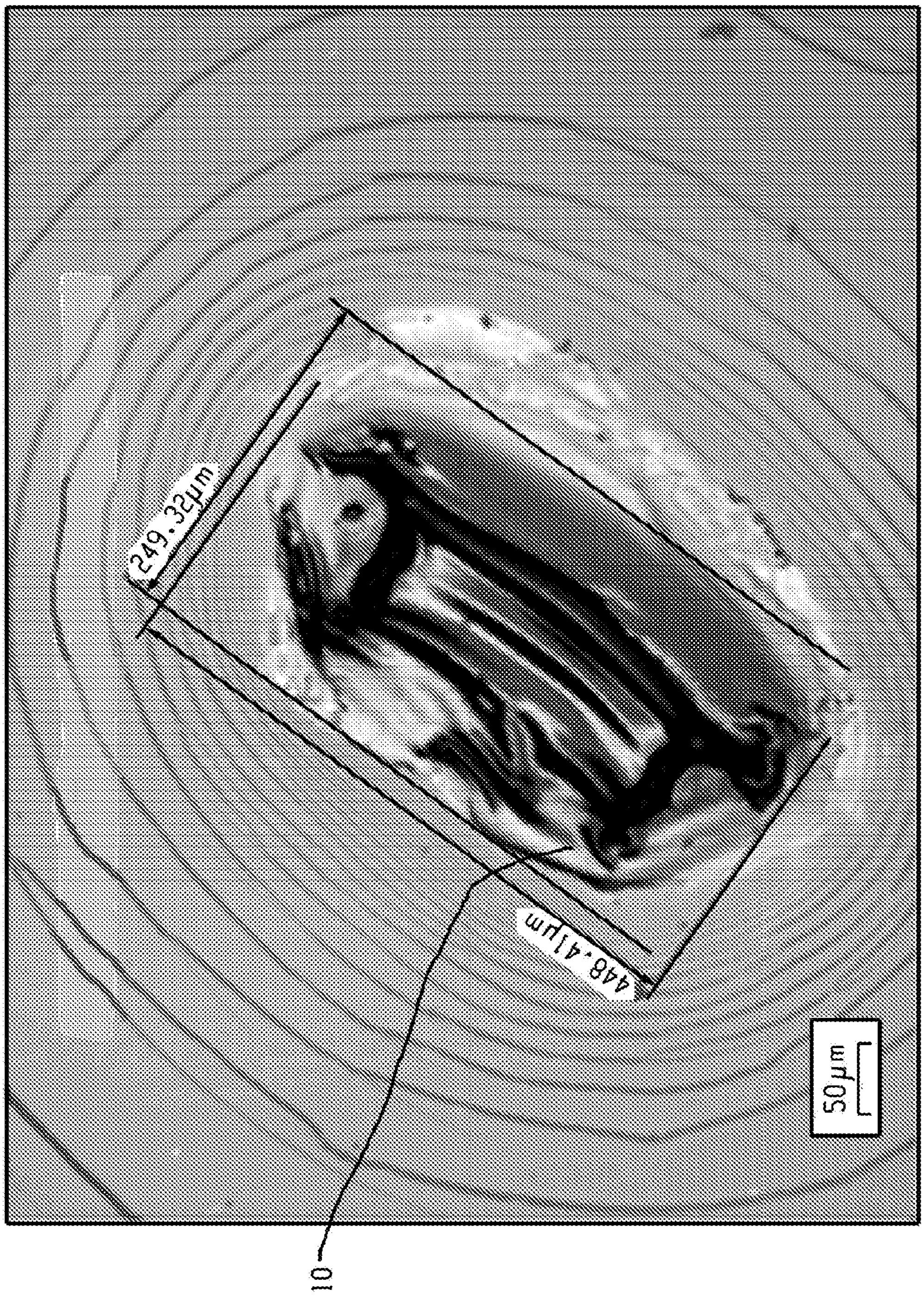


FIG 2

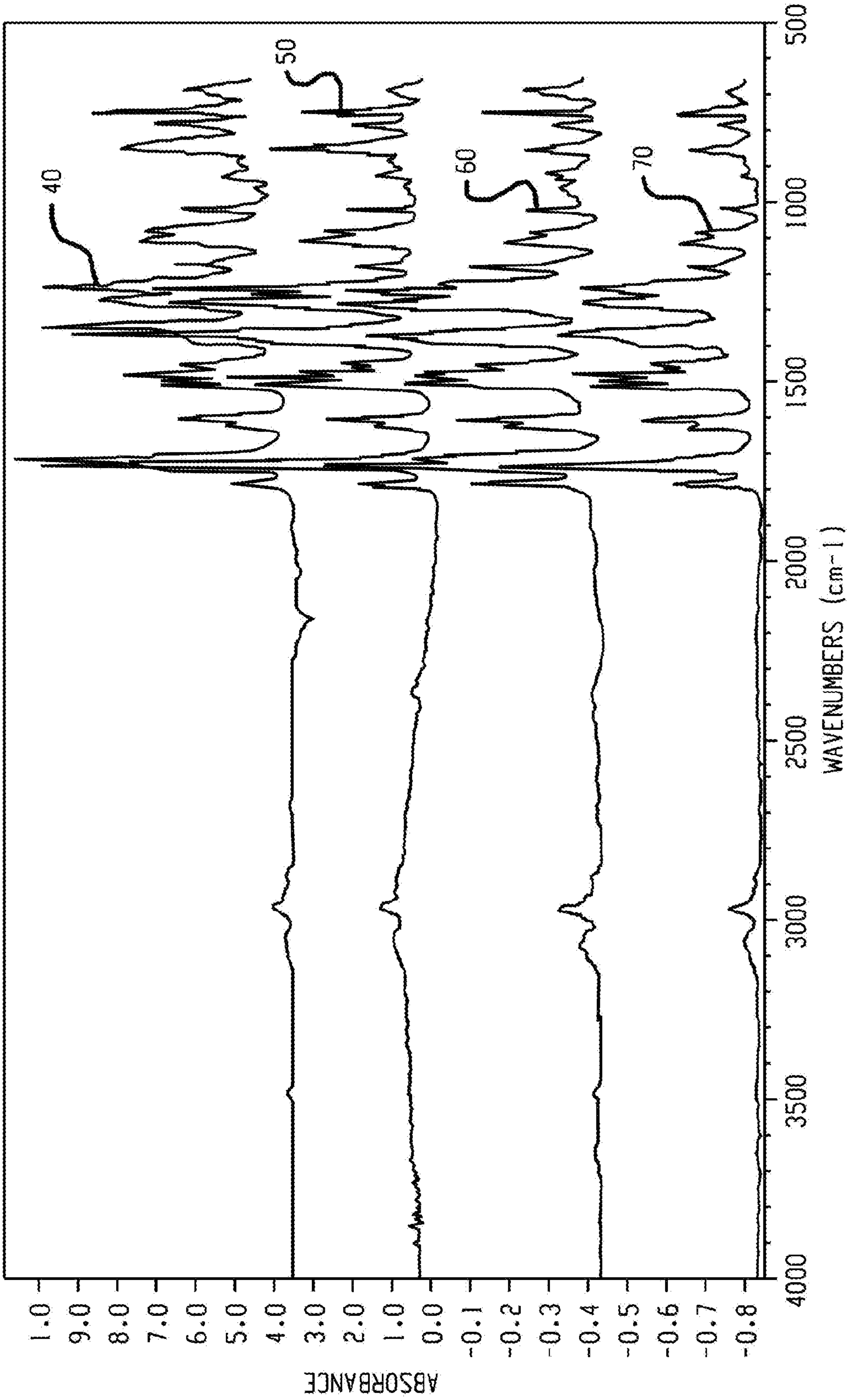
ABSORBANCE
WAVENUMBERS (cm-1)
4000
3500
3000
2500
2000
1500
1000
500
1.0
9.0
8.0
7.0
6.0
5.0
4.0
3.0
2.0
1.0
0.0
-0.1
-0.2
-0.3
-0.4
-0.5
-0.6
-0.7
-0.8
40
50
60
70

FIG 3

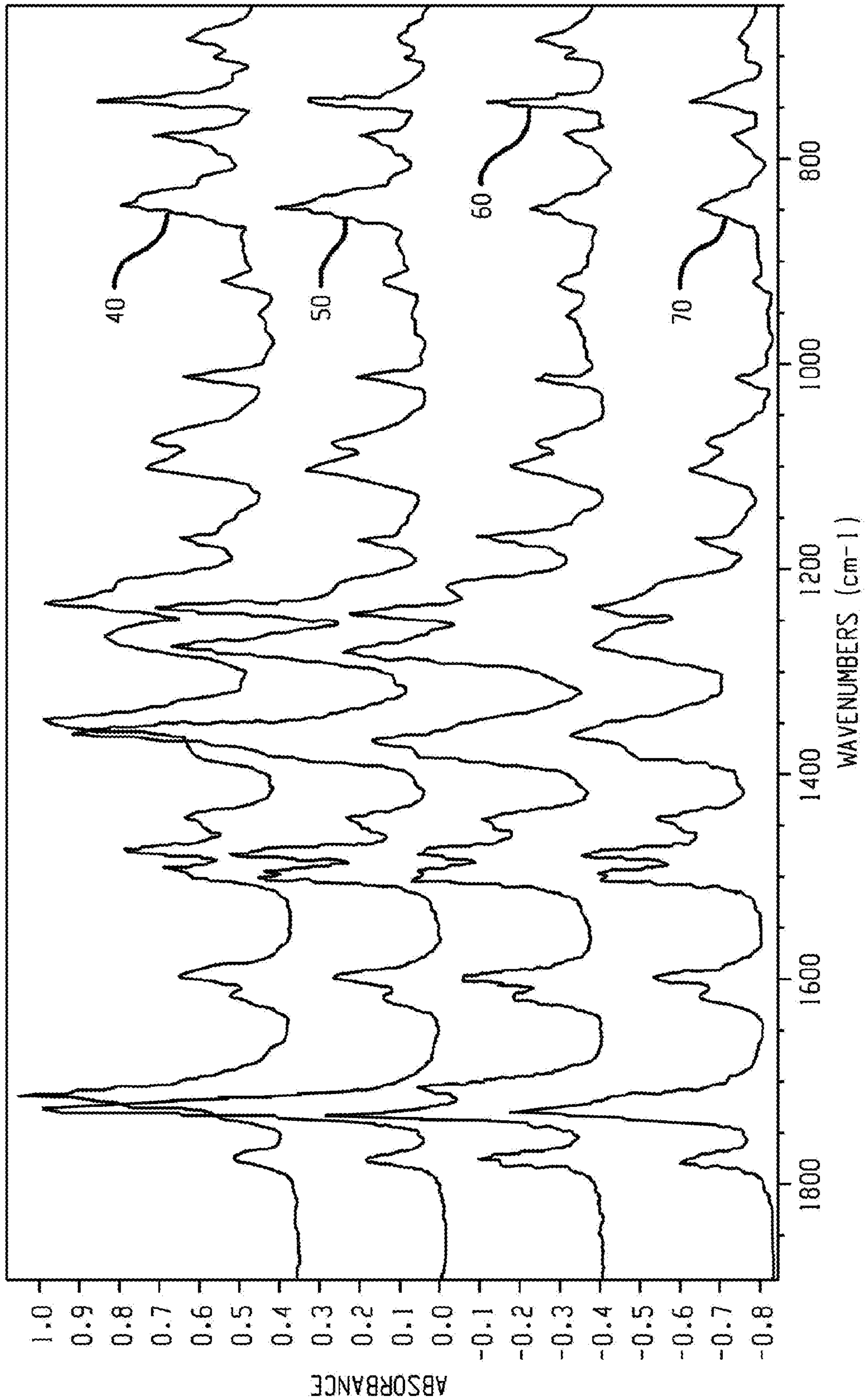
ABSORBANCE
1.0
0.9
0.8
0.7
0.6
0.5
0.4
0.3
0.2
0.1
0.0
-0.1
-0.2
-0.3
-0.4
-0.5
-0.6
-0.7
-0.8
1800
1600
1400
1200
1000
800
WAVENUMBERS (cm-1)
40
50
60
70

FIG 4

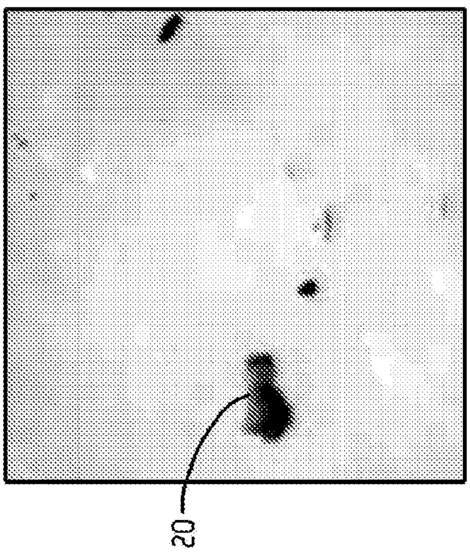


FIG 5A

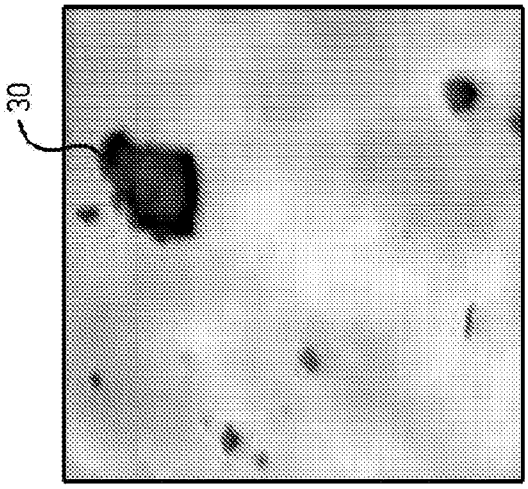


FIG 5B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014194212 A1
- US 5191026 A
- US 6008298 A
- US 5225496 A
- US 5096968 A